(19) Europäisches Patentamt

European Patent Office

Office européen des brevets

(11) **EP 1 708 064 A1**

(12) **DEMANDE DE BREVET EUROPEEN**

(43) Date de publication:
04.10.2006 Bulletin 2006/40

(51) Int Cl.:
*G05B 23/02* (2006.01)

(21) Numéro de dépôt: 05358004.9

(22) Date de dépôt: 30.03.2005

(84) Etats contractants désignés:
**AT BE BG CH CY CZ DE DK EE ES FI FR GB GR
HU IE IS IT LI LT LU MC NL PL PT RO SE SI SK TR**
Etats d'extension désignés:
**AL BA HR LV MK YU**

(71) Demandeur: **INEOS EUROPE LIMITED**
**79-87 Kingston Road**
**Staines**
**Middlesex TW18 1DT (GB)**

(72) Inventeur: **La désignation de l'inventeur n'a pas
encore été déposée**

(74) Mandataire: **Preece, Michael et al**
**COMPASS PATENT LLP**
**Compass Point**
**79-87 Kingston Road**
**Staines, Middlesex TW18 1DT (GB)**

(54) **Procede et systeme de selection de variables pertinentes pour deceler une defaillance et
support d'enregistrement et programme pour ce procede**

(57) Ce procédé de sélection automatique de variables pertinentes pour déceler une défaillance dans une installation automatisée de production d'un produit, comporte une étape (220) de mesure des variations d'un couple de variables corrélées, une étape (234) de vérification de la cohérence des variations des variables corrélées en calculant un symptôme (en 270) de corrélation, puis en comparant (en 292) la valeur calculée de ce symptôme à un seuil prédéterminé, et une étape (294) de sélection du couple de variables en tant que variables pertinentes, si le seuil prédéterminé est franchi.

FIG.3B

EP 1 708 064 A1

Printed by Jouve, 75001 PARIS (FR)

**Description**

La présente invention concerne un procédé et un système de sélection de variables pertinentes pour déceler une défaillance et un support d'enregistrement et programme pour ce procédé.

Ces procédés sont en particulier utilisés avec des méthodes de diagnostic de pannes dans des installations automatisées de production.

Typiquement, une installation automatisée de production, telle que, par exemple, une raffinerie, comporte des milliers de capteurs et d'actionneurs placés un peu partout dans cette installation pour déterminer son état de fonctionnement. Ces capteurs peuvent être aussi simples que des détecteurs propres à réaliser une acquisition d'une valeur booléenne « tout ou rien ». De même un actionneur peut n'avoir que deux états. Ces capteurs et actionneurs sont raccordés à un système informatique pour contrôler et commander cette installation. Le système informatique est équipé de cartes d'acquisition des grandeurs physiques mesurées par les capteurs et/ou des consignes de commande délivrées par les actionneurs. Dans le système informatique, chaque valeur acquise est contenue dans une variable informatique correspondant à un capteur ou à un actionneur. Etant donné le nombre de capteurs et d'actionneurs, il existe un très grand nombre de telles variables dans le système informatique. Classiquement, le système informatique contient plusieurs milliers de telles variables.

Le système informatique est capable de contrôler et/ou de commander l'installation à partir des valeurs de ces variables, chacune d'elle étant représentative de l'état de fonctionnement de l'installation à l'instant courant.

Ici, puisque chaque variable contient une valeur mesurée ou acquise, on désignera par l'expression « mesure d'une variable » les étapes consistant à mesurer à l'aide d'un capteur une grandeur physique correspondante ou à acquérir une consigne de commande et à stocker cette valeur mesurée ou acquise dans la variable.

Dans ce contexte, les méthodes de diagnostic de pannes utilisent ces variables pour essayer d'identifier automatiquement une défaillance de l'installation.

Généralement, une défaillance peut être identifiée à partir de l'étude d'un nombre limité de variables pertinentes choisies parmi l'ensemble des variables du système informatique. Il est donc possible d'accélérer considérablement l'exécution d'une méthode de diagnostic si les variables pertinentes pour déceler la défaillance ont déjà été sélectionnées et identifiées.

A cet effet, des procédés de sélection automatique des variables pertinentes sont connus. Dans ces procédés connus, une valeur simulée pour chaque variable est calculée à l'aide d'un modèle informatique de l'installation. Cette valeur simulée correspond à la valeur que l'on s'attend à mesurer sur l'installation. Ensuite, la valeur simulée est comparée à la valeur mesurée contenue dans la variable correspondante du système informatique. Si l'écart entre la valeur simulée et la valeur mesurée dépasse un seuil prédéterminé, alors cette variable est sélectionnée comme étant pertinente pour déceler une défaillance. En effet, un tel écart entre la valeur attendue et la valeur mesurée résulte probablement de la présence d'une panne ou d'une défaillance dans l'installation.

Grâce à ces procédés de sélection, le nombre de variables à étudier pour déceler une défaillance est réduit de façon très importante, ce qui accélère la mise en oeuvre d'une méthode de diagnostic.

Toutefois, ces procédés connus de sélection sont compliqués, car ils nécessitent le calcul de valeurs simulées à l'aide d'un modèle de l'installation.

L'invention vise à remédier à cet inconvénient en proposant un procédé plus simple de sélection automatique de variables pertinentes pour déceler une défaillance.

L'invention a donc pour objet un tel procédé de sélection comportant :

- pour chaque couple de variables corrélées formé d'une variable influente principale et d'une variable commandée, une étape de mesure des variations de la variable influente principale et de la variable commandée à l'aide de capteurs, les variations de la variable influente principale et de la variable commandée étant corrélées par l'intermédiaire d'une relation causale,

- une étape de vérification que la variable commandée varie dans une proportion explicable par la variation de la variable influente principale en calculant un symptôme de corrélation dont la valeur est fonction, à la fois des variations mesurées de la variable influente principale et de la variable commandée, puis en comparant la valeur calculée de ce symptôme à un seuil prédéterminé, et

- une étape de sélection de la variable influente principale et de la variable commandée en tant que variables pertinentes, si le seuil prédéterminé est franchi.

Dans le procédé ci-dessus, un couple de variables corrélées, c'est-à-dire ici, la variable influente principale et la variable commandée, est sélectionné comme étant pertinent si les variations de la variable commandée ne peuvent pas s'expliquer par les variations de la variable influente principale. Cette vérification est faite en calculant un symptôme dont la valeur est fonction des variations mesurées de la variable influente principale et de la variable commandée. Ce procédé ne calcule donc pas une valeur simulée pour l'une des deux variables et ne compare pas la valeur simulée à la valeur mesurée pour en déduire si cette variable est pertinente pour déceler une défaillance. Il n'est donc pas nécessaire de disposer d'un modèle de l'installation permettant de calculer la valeur simulée d'une variable. Au contraire, le procédé ci-dessus exploite les relations causales existantes entre deux variables corrélées pour sélectionner les variables pertinentes. En effet, lorsque les variations de deux variables corrélées ne sont pas conformes à la relation causale qui les unit, cela traduit probablement la présence d'une défaillance. Ce couple de variables est donc pertinent pour diagnostiquer une panne. L'exploitation des relations causales entre variables corrélées est plus simple à mettre en oeuvre que la modélisation d'une installation suivie de la simulation de ce modèle.

Les modes de réalisation de ce procédé de sélection peuvent comporter une ou plusieurs des caractéristiques suivantes :

- lors de l'initialisation du procédé, une étape de définition pour chaque couple de variables corrélées d'un sens de variation attendu de la variable commandée par rapport au sens de variation de la variable influente principale, et
- une étape de réduction du nombre de variables potentiellement pertinentes pour déceler une défaillance en éliminant systématiquement tous les couples de variables corrélées dans lesquels le sens de variation de la variable commandée par rapport au sens de variation de la variable influente principale correspond au sens de variation attendu défini lors de l'initialisation du procédé ;
- le symptôme de corrélation calculé est proportionnel au produit des variations mesurées de la variable influente principale et de la variable commandée ;
- lors de l'initialisation du procédé, une étape de définition pour chaque couple de variables corrélées d'un retard prédéterminé représentant le temps écoulé entre l'instant où la variable influente principale varie et l'instant où la variable commandée varie en réponse à cette variation de la variable influente principale, et
- le symptôme de corrélation calculé est proportionnel au produit de la variation mesurée de la variable commandée à l'instant courant et de la variation mesurée de la variable influente principale à l'instant courant moins le retard prédéterminé défini pour ce couple lors de l'initialisation du procédé ;
- une étape de calcul d'un coefficient de confiance proportionnel à la moyenne des variations mesurées pour l'une des variables du couple divisé par l'écart type des variations mesurées pour cette même variable, et le symptôme de corrélation calculé est également fonction de ce coefficient de confiance calculé ;
- une étape de calcul d'un rapport d'influence des variations de la variable influente principale sur les variations de la variable commandée en fonction des variations mesurées de la variable influente principale et de variations mesurées pour une ou plusieurs variables perturbatrices, chaque variable perturbatrice étant propre à influer sur les variations de la variable commandée, et le symptôme de corrélation calculé est fonction du rapport d'influence calculé ;
- lors de l'initialisation du procédé, une étape de définition d'un gain prédéterminé entre les variations de la variable influente principale et les variations de la variable commandée et d'un gain entre les variations de chaque variable perturbatrice et les variations de la variable commandée, et le rapport d'influence calculé est également fonction de ces gains prédéterminés ;
- une étape de mesure d'une même grandeur physique de l'installation à l'aide d'un couple de deux capteurs différents, les valeurs mesurées par chaque capteur étant contenues dans des variables respectives d'un couple de variables redondantes,
- une étape de vérification si un écart entre les valeurs mesurées par chaque capteur reste à l'intérieur de limites prédéterminées en calculant un symptôme de redondance dont la valeur est fonction de l'écart entre les valeurs mesurées par chacun des capteurs du couple, puis en comparant la valeur calculée pour ce symptôme à un seuil prédéterminé, et
- une étape de sélection du couple de variables redondantes en tant que variables pertinentes si le seuil prédéterminé est franchi ;
- pour au moins un récipient de stockage de matière, une étape de mesure des quantités de matière entrante et sortante du récipient et une étape de mesure de la quantité de matière stockée à l'intérieur du récipient à l'aide de capteurs, chaque quantité mesurée étant contenue dans une variable correspondante,
- une étape de vérification d'un bilan matière en calculant un symptôme de bilan matière instantané dont la valeur est fonction de la différence entre d'une part les quantités mesurées de matière entrante et sortante entre un instant courant et un instant précédent, et, d'autre part, la différence entre les quantités mesurées de matière stockée à l'instant courant et à l'instant précédent, puis en comparant la valeur calculée de ce symptôme de bilan matière instantané à un seuil prédéterminé, et une étape de sélection des variables contenant les quantités mesurées de matière en tant que variables pertinentes si le seuil prédéterminé est franchi,
- une étape de vérification d'un bilan matière cumulé pour ce récipient en calculant un symptôme de bilan matière cumulé dont la valeur est fonction de l'accumulation des valeurs calculées du symptôme de bilan matière instantané pendant une période sur laquelle le sens de variation de la quantité de matière stockée ne change pas, puis en comparant la valeur calculée du symptôme de bilan matière cumulé à un seuil prédéterminé, et une étape de sélection des variables contenant des quantités mesurées de matière en tant que variables pertinentes si le seuil prédéterminé est franchi.

Les modes de réalisation du procédé de sélection présentent en outre les avantages suivants :

- la simple vérification que le sens de variation d'une variable corrélée par rapport à une autre correspond au sens de variation attendu permet déjà à lui seul d'éviter de sélectionner un grand nombre de variables qui ne sont pas pertinentes pour déceler une défaillance dans l'installation, et ceci de façon simple ;
- l'utilisation d'un symptôme de corrélation dont la valeur est proportionnelle au produit des variations mesurées permet d'obtenir une valeur qui ne privilégie aucune des deux variables d'un couple de variables corrélées ;
- l'utilisation du retard prédéterminé ou du coefficient de confiance permet d'éviter des sélections inutiles de variables ;
- l'utilisation du rapport d'influence évite de sélectionner inutilement un couple de variables corrélées, lorsque la variable influente principale joue un rôle mineur sur les variations de la variable commandée ;
- l'utilisation de la redondance qui existe entre deux variables permet de sélectionner simplement et de façon fiable un couple de variables redondantes si nécessaire ;
- l'utilisation de bilan matière permet également de sélectionner simplement et de façon efficace des variables pertinentes ; et
- l'utilisation d'un bilan matière cumulé permet de sélectionner des variables pertinentes lorsque la défaillance est une dérive lente dans un bilan matière.

L'invention a également pour objet un support d'enregistrement d'informations ainsi qu'un programme d'ordinateur adaptés pour la mise en oeuvre du procédé de sélection ci-dessus.

L'invention a également pour objet un système de sélection automatique de variables pertinentes pour déceler une défaillance dans une installation automatisée de production, ce système comportant :

- pour chaque couple de variables corrélées formé d'une variable influente principale et d'une variable commandée, des capteurs propres à mesurer les variations de la variable influente principale et de la variable commandée, les variations de la variable influente principale et de la variable commandée étant corrélées par l'intermédiaire d'une relation causale,
- un module de vérification propre à vérifier si la variable commandée varie dans une proportion explicable par la variation de la variable influente principale en calculant un symptôme dont la valeur est fonction à la fois des variations mesurées de la variable influente principale et de la variable commandée, puis en comparant la valeur calculée de ce symptôme à un seuil prédéterminé, et
- un module de sélection de la variable influente principale et de la variable commandée en tant que variable pertinente si le seuil prédéterminé est franchi.

L'invention sera mieux comprise à la lecture de la description qui va suivre, donnée uniquement à titre d'exemple et faite en se référant aux dessins sur lesquels :

- la figure 1 est une illustration schématique de l'architecture d'une installation automatisée de production d'un produit ;
- la figure 2 est une illustration schématique de l'architecture d'un système de sélection de variables pertinentes pour déceler une défaillance dans l'installation de la figure 1 ;
- les figures 3A et 3B sont chacune une partie d'un organigramme d'un procédé de sélection de variables pertinentes pour déceler une défaillance mis en oeuvre dans le système de la figure 2 ;
- les figures 4A, 4B et 4C sont des graphes illustrant le fonctionnement du système de la figure 2 en cas de défaillance d'un capteur de niveau de l'installation de la figure 1 ;
- la figure 5 est un graphe illustrant le fonctionnement du système de la figure 2 dans le cas d'une défaillance d'une vanne de l'installation de la figure 1 ; et
- les figures 6A à 6C sont des graphes illustrant le fonctionnement du système de la figure 2 dans le cas d'une défaillance d'un débitmètre de l'installation de la figure 1.

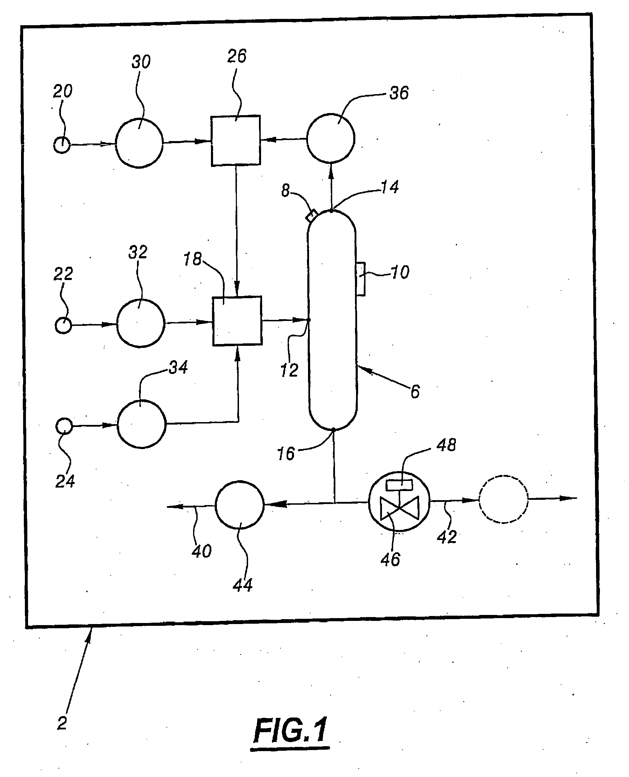

La figure 1 représente une partie d'une installation automatisée 2 de production d'un produit. Ici, cette installation automatisée est une raffinerie de pétrole. La partie illustrée sur la figure 1 de la raffinerie comporte un ballon 6 formant récipient de matière équipé de deux capteurs 8 et 10 du niveau à l'intérieur de ce ballon 6. Les capteurs 8 et 10 ne sont pas placés au même endroit sur le ballon 6 et ne font pas, par exemple, appel aux mêmes technologies pour mesurer le niveau à l'intérieur du ballon 6.

Le ballon 6 comporte une entrée 12 de matière et deux sorties 14 et 16 de matière.

L'entrée 12 est raccordée par l'intermédiaire d'un mélangeur 18 à une source principale 20 d'alimentation en matière et à deux sources secondaires 22 et 24 d'alimentation en matière.

Plus précisément, la matière fournie par la source 20 est envoyée dans un aéro-réfrigérant 26 pour être refroidie. La matière refroidie dans l'aéro-réfrigérant 26 est alors transmise au mélangeur 18.

Le mélangeur 18 mélange la matière issue de l'aéro-réfrigérant et celle issue des alimentations secondaires 22 et 24.

L'installation 2 est également équipée de débitmètres 30, 32 et 34 pour mesurer le débit entrant de matière délivré respectivement par les sources 20, 22 et 24.

L'installation 2 est également équipée d'un débitmètre 36 pour mesurer la quantité extraite de gaz à partir de la sortie 14 et envoyée à l'aéro-réfrigérant 26.

La sortie 16 est raccordée à deux canalisations 40 et 42, de manière à pouvoir envoyer de la matière extraite de l'intérieur du ballon 6 dans deux directions différentes. La canalisation 40 est équipée d'un débitmètre 44 pour mesurer le débit de matière circulant dans cette canalisation.

La canalisation 42 est équipée d'une vanne 46 dont la commande est récupérée par un capteur 48.

Aucun capteur apte à mesurer directement le débit dans la canalisation 42 n'est prévu dans cette installation 2.

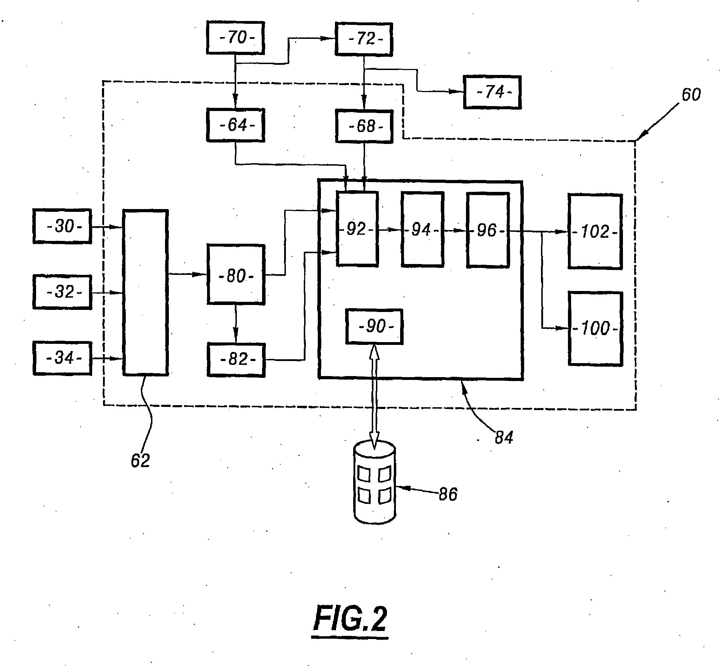

La figure 2 représente un système de sélection de variables pertinentes pour déceler une défaillance dans l'installation 2. Ce système comprend un calculateur électronique 60. Ce calculateur 60 est équipé de cartes d'acquisition 62, 64 et 68. Ce système de sélection est de préférence intégré dans un système informatique de contrôle et/ou de commande de l'installation 2 pour que les cartes d'acquisition soient communes à ces deux systèmes.

La carte d'acquisition 62 est raccordée à l'ensemble des capteurs de l'installation 2. Pour simplifier la figure 2, seul le raccordement de la carte 62 aux débitmètres 30, 32 et 34 est représenté.

La carte 64 permet d'acquérir les consignes de commande émises par un pupitre de commande 70 en réponse aux instructions d'un opérateur de l'installation 2. Ces consignes de commande sont également transmises à des régulateurs de l'installation 2 qui commandent, en fonction de ces consignes, des actionneurs de l'installation 2. Pour simplifier la figure 2, seul un régulateur 72 et un actionneur 74 ont été représentés. Ces régulateurs peuvent être des régulateurs de débit ou de pression et les actionneurs peuvent être des actionneurs de vanne ou autres tels que des variateurs de vitesse pour des aéro-réfrigérants.

La carte 68 est destinée à acquérir les commandes transmises des régulateurs vers les actionneurs régulés.

Ces cartes d'acquisition 62, 64 et 68 enregistrent les grandeurs physiques acquises, c'est-à-dire les niveaux, débits, températures ou autres mesurés par des capteurs, les consignes de commande et les commandes dans des variables respectives, de manière à ce que ces informations puissent être manipulées par le calculateur 60. Chacune de ces variables porte un nom.

Le tableau ci-dessous indique, dans le cas particulier de l'installation 2, le nom des variables dans lesquelles sont mémorisées les valeurs mesurées par les capteurs 8, 10, 30, 32, 34, 36, 44 et 48.

| Référence numérique du capteur | Nom de la variable correspondante |
|---|---|
| 8 | KLCA0203 |
| 10 | KLCA0283 |
| 30 | KFCL0201 |
| 32 | KFIL0214 |
| 34 | KFC0237 |
| 36 | KFCL0202 |
| 44 | KFC0289 |
| 48 | KLV0203 |

Le calculateur 60 est équipé d'un module 80 de validation des signaux mesurés par les capteurs et d'un module 82 de calcul de mesures virtuelles à partir des valeurs mesurées par les capteurs.

Les signaux validés, les mesures virtuelles calculées, les consignes de commandes acquises par les cartes 64, et les commandes acquises par la carte 68 sont transmis à un module 84 de sélection automatique de variables pertinentes pour déceler une défaillance. Ce module 84 est raccordé à une mémoire 86 dans laquelle sont enregistrées des définitions de symptômes. A cet effet, le module 84 comporte un sous-module 90 de définition de symptômes.

Le module 84 comporte également un sous-module 92 de mesure de variations des variables et de calcul de coefficient de confiance et de rapport d'influences entre ces variables. A partir des données établies par le sous-module 92, un sous-module 94 de vérification est apte à vérifier la cohérence entre elles des différentes variables mesurées.

Enfin, en fonction du résultat de la vérification réalisée par le sous-module 94, un sous-module de sélection 96 sélectionne ou non une variable comme étant pertinente pour déceler une défaillance.

Le calculateur 60 comporte également une interface homme/machine 100 sur laquelle peuvent être affichées les variables pertinentes sélectionnées par le module 84 et un module 102 de diagnostic automatique d'une panne dans l'installation 2 à partir des variables pertinentes sélectionnées par le module 84.

Typiquement, les modules 80, 82, 84 et 102 sont des modules logiciels.

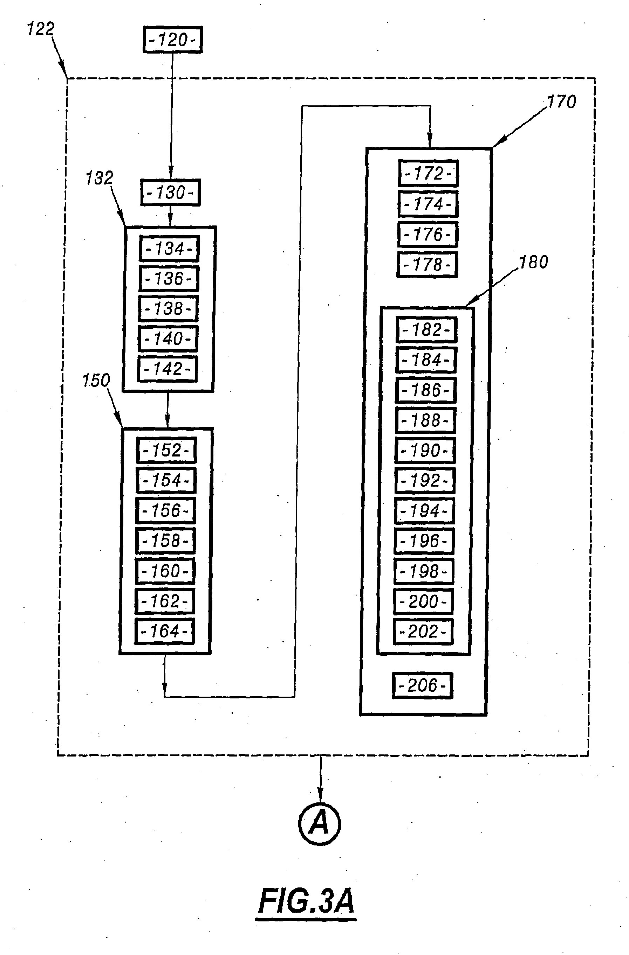

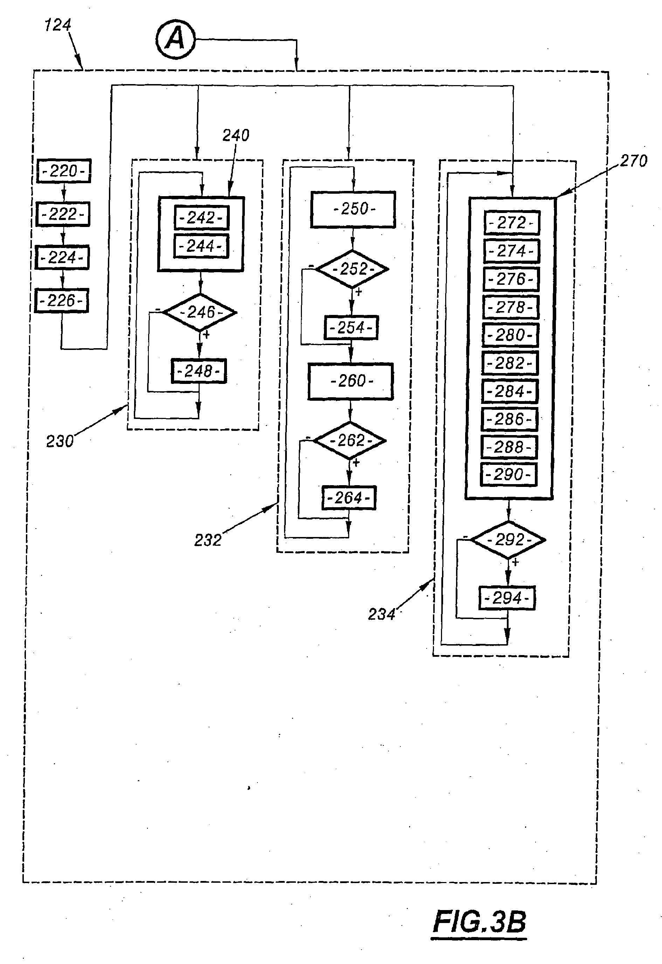

Le calculateur 60 est, ici, réalisé à partir d'un ordinateur programmable conventionnel apte à exécuter des instructions enregistrées sur un support d'enregistrement d'informations. A cet effet, la mémoire 86 comporte des instructions pour l'exécution du procédé des figures 3A et 3B, lorsque ces instructions sont exécutées par le calculateur 60. Ces instructions comportent notamment les instructions correspondant aux modules 80, 82, 84 et 102 et forment un programme d'ordinateur.

Le fonctionnement du système de sélection de la figure 2 va maintenant être décrit en regard du procédé des figures 3A et 3B, dans le cas particulier de l'installation 2.

Avant même de commencer à initialiser le procédé de sélection, une étape 120 d'archivage des valeurs des variables acquises pendant de longues périodes où l'installation 2 fonctionne sans défaillance, est exécutée. Typiquement, lors de l'étape 120, les variables mesurées à l'aide de capteurs sont archivées avec une période d'échantillonnage d'une minute par exemple.

Une fois ces archives construites, une phase 122 d'initialisation du procédé de sélection débute. La phase 122 est réalisée par un responsable de l'application. Cette phase 122 vise à initialiser l'ensemble des paramètres qui permettront, lors d'une phase ultérieure 124, de sélectionner automatiquement les variables pertinentes pour déceler une défaillance.

Lors de la phase 122, une étape 130 de définition des mesures virtuelles est réalisée. Une mesure virtuelle est un calcul de la valeur d'une grandeur physique mesurable en un point donné de l'installation 2, à partir des mesures réalisées par d'autres capteurs. Ceci permet notamment de palier à l'absence de certains capteurs dans l'installation 2. Ici, à titre d'exemple, la relation permettant de calculer le débit de matière à l'intérieur de la canalisation 42 est définie. Le débit à l'intérieur de la canalisation 42 est, par exemple, calculé à partir des débits mesurés par les débitmètres 30, 32, 34 et 44 et de la position de la vanne 46. Ce débit calculé est mémorisé dans une variable nommée KYFV0203. Cette variable KYFV0203 est utilisée par la suite comme une variable mémorisant la valeur d'une grandeur physique directement mesurée par un capteur.

Lors d'une étape 132, des symptômes de redondance sont définis. Lors de cette étape 132, des couples de variables redondantes sont sélectionnées, lors d'une opération 134. Par variables redondantes, on entend ici, des variables contenant chacune la valeur mesurée pour une même grandeur physique de l'installation 2 par des capteurs différents. Ces variables sont donc interchangeables. Il existe une relation bijective entre les valeurs de ces deux variables faisant uniquement intervenir des constantes.

Par exemple, ici, les variables KLCA0203 et KLCA0283 sont redondantes et sont donc sélectionnées lors de l'opération 134.

Lorsque ces variables redondantes sont des mesures de niveau, à l'intérieur d'un ballon ou d'un récipient, les données permettant de convertir la hauteur mesurée en une masse de matière stockée dans le ballon ou le récipient sont enregistrées lors d'une opération 136. Par exemple, les données enregistrées pour les niveaux mesurés par les capteurs 8 et 10 sont ici :

- un abaque du ballon 6 donnant le volume en fonction de la hauteur ; et
- la densité du produit stocké dans le ballon 6.

La conversion des hauteurs en unité de masse permet de comparer ces hauteurs même si les capteurs de niveaux sont placés à différentes hauteurs à l'intérieur du ballon 6.

Ensuite, lors d'une opération 138, un écart moyen $E_{R\text{-}ref}$ entre les valeurs mesurées pour les deux variables redondantes du couple sélectionné est calculé lors d'une opération 138. Cet écart moyen $E_{R\text{-}ref}$ est, par exemple, calculé à partir des données archivées lors de l'étape 120.

Une limite haute HL et une limite basse LL pour le symptôme de redondance sont alors calculées lors d'une opération 140. A cet effet, une période de données archivées où les variations du niveau sont importantes dans le ballon 6 et où les capteurs 6 et 8 ont fonctionné correctement est sélectionnée. Une valeur Red suivante est alors calculée à différents instants de cette période pour déterminer sa valeur maximale $Red_{max}$ sur cette période sélectionnée :

$$\text{Red} = \left| \left( \sum_{i=0}^{i=4} \left( pv1_{t-i} - pv2_{t-i} \right) \times K_i \right) - E_{R-Ref} \right| \qquad (1)$$

où

- Red est la valeur Red calculée ;
- i est un indice paramétrable variant de 0 à 4, par exemple ;
- $pv1_{t-i}$ est la valeur de la première variable redondante à l'instant t-i ;
- $pv2_{t-i}$ est la valeur de la seconde variable redondante à l'instant t-i ;
- t est l'instant courant ;
- $K_i$ est un coefficient de pondération ; et
- $E_{R-Ref}$ est l'écart moyen calculé lors de l'opération 138.

Tous les coefficients $K_i$ sont, par exemple, choisis égaux.

Ensuite, une fois que la valeur $Red_{max}$ a été déterminée sur la période sélectionnée, les valeurs des limites HL et LL sont déterminées à l'aide, par exemple, de deux relations suivantes :

$$\left( Red_{max} - LL \right) / \left( HL - LL \right) = 0,1 \qquad (2)$$

$$HL = 25 \times LL \qquad (3)$$

où :

- « x » est la fonction multiplication ;
- HL est la valeur de la limite HL ; et
- LL est la valeur de la limite LL.

Le rapport « 25 » entre les valeurs des limites HL et LL n'est qu'illustratif et dépend de l'application envisagée. Ce rapport n'est pas nécessairement le même pour tous les symptômes.

Enfin, un seuil $SL_R$ de sélection de symptômes de redondance est fixé lors d'une opération 142. Par exemple, ici, le seul $SL_R$ est égal à 0,5.

A titre d'exemple numérique, l'écart de référence $E_{R-Ref}$ pour les variables KLCA0203 et KLCA0283 est égal à -0,38 et les limites HL et LL sont respectivement égales à 0,66 et 0,026.

Lors d'une étape 150, des symptômes de bilans matière instantané et cumulé sont définis pour chaque mesure de niveau dans un ballon ou un récipient. Ces bilans matière permettent de vérifier la cohérence entre les quantités mesurées de matière entrante et sortante et la variation mesurée de la quantité de matière stockée dans un ballon ou un récipient.

Pour cela, lors d'une opération 152, les variables contenant les quantités mesurées de matière entrante et sortante dans un récipient sont sélectionnées. Lors de cette opération 152, la variable contenant la mesure de la quantité de matière stockée dans ce récipient est également sélectionnée.

Par exemple, les variables KFCL0201, KFIL0214 et KFC0237 sont sélectionnées comme contenant les quantités mesurées de matière entrante dans l'ensemble formé par le ballon 6, l'aéro-réfrigérant 26 et le mélangeur 18. La variable KFC0289 et la variable calculée KYFV0203 sont sélectionnées comme contenant les quantités de matière sortante de cet ensemble. Enfin, pour un premier bilan matière, la variable KLCA0203 est sélectionnée comme contenant la quantité de matière stockée dans le ballon 6. Un second bilan matière différent du premier bilan matière est défini en remplaçant simplement la variable KLCA0203 par la variable KLCA0283.

Si cela n'a pas déjà été fait, lors d'une opération 154, les données permettant de convertir une mesure de hauteur en une masse de matière stockée dans le ballon sont enregistrées.

Lors d'une opération 156, un écart de référence moyen $E_{BM-Ref}$ est calculé. Cela est, par exemple, réalisé en faisant la moyenne des écarts constatés dans plusieurs bilans matière instantanés établis à partir de mesures archivées lors de l'étape 120. La formule permettant de calculer le bilan matière instantané à un instant t donné est la suivante :

$$MBinst(t) = \sum_{Fin} Fin(t) - \sum_{Fout} Fout(t) + \sum_{Li} \left( Mi(t) - Mi(t-1) \right) \qquad (4)$$

où :

- MBinst(t) est la valeur du bilan matière instantané à l'instant t ;

- $\sum_{Fin} Fin(t)$ est le cumul des quantités mesurées de matière entrante entre l'instant t et l'instant t-1 ;

- $\sum_{Fout} Fout(t)$ est le cumul des quantités de matière sortante mesurées entre l'instant t et l'instant t-1;

- Mi(t) est la quantité de matière stockée à l'intérieur du ballon à l'instant t ;
- Mi(t-1) est la quantité de matière stockée à l'intérieur du ballon mesurée à l'instant t-1, et
- t est l'instant courant d'échantillonnage et t-1 l'instant précédent.

L'écart moyen $E_{BM-Ref}$ est calculé en faisant la moyenne à plusieurs instants du bilan matière instantané MBinst (t).

Lors d'une opération 158, les limites HL et LL pour un symptôme de bilan matière instantané sont déterminées. Par exemple, pour une période de données archivées où aucune défaillance n'est présente, l'écart maximal $E_{BMI-max}$ entre la valeur du bilan matière instantané MBinst(t) est l'écart $E_{BM-Ref}$ est relevé. Ensuite, les limites HL et LL sont calculées à l'aide, par exemple, des relations suivantes :

$$(E_{BMI-max} - LL) \ / \ (HL - LL) = 0,1 \qquad (5)$$

$$HL = 25 \ x \ LL \qquad (6)$$

A titre d'exemple numérique, pour le bilan matière faisant intervenir la variable KLCA0203, l'écart $E_{BM-Ref}$ est égal à 10,76 et les limites HL et LL sont respectivement égales à 830 et 33. Pour le bilan matière instantané faisant intervenir la variable KLCA0283, l'écart $E_{BM-Ref}$ est égal à 10,75 et les limites HL et LL sont respectivement égales à 830 et 33.

Pour définir un symptôme de bilan matière cumulé à partir du bilan matière instantané, un nombre de cycles maximum avant réinitialisation est fixé, lors d'une opération 160. Le bilan matière cumulé correspond à la somme des bilans matière instantanés successivement calculés au maximum sur le nombre de cycles définis, lors de l'opération 160. Le nombre de cycles correspond au nombre maximum de périodes d'échantillonnage et au nombre maximum de bilans matière instantanés à additionner. L'accumulation des bilans matières instantanés est interrompue avant que le nombre maximum de cycles ne soit atteint si le sens de variation de la mesure de niveau change, avec une certaine tolérance pour éviter qu'un simple bruit sur la mesure de niveau n'interrompe l'accumulation. Par exemple, le nombre de cycles avant réinitialisation est fixé à 232 et à 200 pour les bilans matière cumulés faisant intervenir respectivement les variables KLCA0203 et KLCA0283.

Lors d'une opération 162, des limites HL et LL pour le symptôme de bilan matière cumulé sont calculées d'une façon similaire à ce qui a été décrit en regard de l'opération 158.

A titre d'exemple, les limites HL et LL pour le bilan matière cumulé faisant intervenir la variable KLCA0203 sont respectivement égales à 9 500 et 380. Ces limites HL et LL sont égales à 14 000 et à 550 pour le bilan matière cumulé faisant intervenir la variable KLCA0283.

Enfin, un seuil de sélection $SL_{BMI}$ pour le bilan matière instantané et un seuil de sélection $SL_{BMC}$ pour le bilan matière cumulé sont fixés lors d'une opération 164. Par exemple, ces seuils $SL_{BMI}$ et $SL_{BMC}$ sont tous les deux choisis égaux à 0,3.

Lors d'une étape 170, des symptômes de corrélation pour des couples de variables corrélées sont définies. Dans chaque couple de variables corrélées, une variable MV est appelée variable influente principale et l'autre variable CV est appelée variable commandée. La variable MV est celle qui influe normalement le plus sur les variations de la variable CV.

A cet effet, lors d'une opération 172, les variables MV et CV d'un couple de variables corrélées sont sélectionnées et des variables DV dites perturbatrices sont également sélectionnées. Les variables perturbatrices sont des variables susceptibles d'influer sur les variations de la variable CV.

Chaque ligne du tableau ci-dessous, indique le nom des variables corrélées ainsi que le nom des variables perturbatrices correspondantes pour la partie de l'installation 2 de la figure 1.

| MV | CV | DV |
|---|---|---|
| KLV0203 | KYFV0203 | Aucune |
| KLV0203 | KLCA0203 | KFCL0201 ; KFCL0202 ; KPV0210 ; KFC0289 |
| KYFV0203 | KLCA0203 | KFCL0201 ; KFCL0202 ; KPV0210 ; KFC0289 |
| KLV0203 | KLCA0283 | KFCL0201 ; KFCL0202 ; KPV0210 ; KFC0289 |
| KYFV0203 | KLCA0283 | KFCL0201 ; KFCL0202 ; KPV0210 ; KFC0289 |

Par exemple, l'interprétation de la deuxième ligne de ce tableau est la suivante. Une modification de la position de la vanne 46 (variable KLV0203) se traduit par une modification correspondante du niveau (variable KLCA0203) à l'intérieur du ballon 6. Toutefois, cette relation causale entre une modification de la position de la vanne 46 et la modification du niveau à l'intérieur du ballon 6 peut être perturbée par l'entrée de matière en provenance de la source primaire 30 (variable KFCL0201) ou en provenance des sources secondaires 32 et 34 (variables KFCL0202 et KPV0210). Cette relation causale peut également être perturbée par une modification du débit (variable KFC0289) à l'intérieur de la canalisation 40.

Ensuite, pour chaque couple de variables corrélées, un sens de variation attendu $S_{atd}$ de la variable CV par rapport au sens de variation de la variable MV est défini lors d'une opération 174. Ici, le sens $S_{atd}$ prend uniquement soit la valeur +1, soit la valeur -1. Lorsque le sens $S_{atd}$ est égal à +1 cela signifie que les variables MV et CV varient dans le même sens, tandis que lorsque le sens $S_{atd}$ est égal à -1, cela signifie que les variables MV et CV varient en sens opposé. La valeur du sens $S_{atd}$ est défini, soit à partir d'observations des données archivées lors de l'étape 120, soit en observant la relation causale qui relie dans l'installation 2 ces deux variables corrélées.

Par exemple, une augmentation de l'ouverture de la vanne 46 se traduit par une augmentation de la variable KLV0203 et par une accélération de la diminution du niveau dans le ballon 6. Le sens de variation attendu $S_{atd}$ entre les variations de la variable KLV0203 et de l'accélération de la variable KLCA0203 est alors défini comme étant égal à -1. On notera que dans le cas particulier des variables contenant des mesures de niveau, ce sont les variations des variations ou accélération de niveau qui sont prises en compte, comme cela sera expliqué plus en détail ci-dessous. Cette remarque s'applique également aux paramètres concernant les mesures de niveau définis lors des opérations suivantes.

Lors d'une opération 176, le retard $\delta_{MV}^{CV}$ entre une variation de la variable MV et la variation résultante de la variable CV est enregistré. Typiquement, ce retard est mesuré à partir de l'observation des données archivées lors de l'étape 120 sur une période de fonctionnement sans défaillance. Les retards $\delta_{DV}^{CV}$ entre des variations des variables perturbatrices DV et la variation résultante de la variable CV sont également enregistrés lors de cette opération 176.

Lors d'une opération 178, un gain $G_{MV}^{CV}$ entre les variations de la variable MV et les variations résultantes de la variable CV est enregistré. De même, lors d'une opération 178, pour chaque variable perturbatrice DV, un gain $G_{DV}^{CV}$ entre la variation de cette variable DV et la variation résultante sur la variable CV est enregistré.

Le tableau ci-dessous donne à titre d'illustration pour chaque couple de variables corrélées définis, la valeur des différents paramètres saisis lors des opérations 174 à 178 :

| Couples variables corrélées / Paramètres | KLV0203-KLCA0203 | KYFV0203-KLCA0203 | KLV0203-KLCA0283 | KYFV0203-KLCA0283 | KLV0203-KYFV0203 |
|---|---|---|---|---|---|
| $S_{atd}$ | -1 | -1 | -1 | -1 | 1 |
| HL | 3,5E-03 | 3,4E-01 | 7,0E-03 | 6,7E-01 | 1,0E+00 |
| LL | 1,4E-04 | 1,3E-02 | 2,8E-04 | 2,7E-02 | 0,0E+00 |
| $G_{MV}^{CV}$ | 1,1E+02 | 1,0E+00 | 1,1E+02 | 1,0E+00 | 1,0E+00 |
| $\delta_{MV}^{CV}$ | 0 | 0 | 0 | 0 | 0 |
| $G_{KFCL0201}^{CV}$ | 1,0E+00 | 1,0E+00 | 1,0E+00 | 1,0E+00 | Néant |
| $\delta_{KFCL0201}^{CV}$ | 0 | 0 | 0 | 0 | Néant |
| $G_{KFCL0202}^{CV}$ | 1,0E+00 | 1,0E+00 | 1,0E+00 | 1,0E+00 | Néant |

| | | | | | |
|---|---|---|---|---|---|
| $\delta_{KFCL0202}^{CV}$ | 0 | 0 | 0 | 0 | Néant |
| $G_{KPV0210}^{CV}$ | -3,2E+01 | -3,2E+01 | -3,2$^E$+01 | -3,2E+01 | Néant |
| $\delta_{KPV0210}^{CV}$ | 0 | 0 | 0 | 0 | Néant |
| $G_{KFC0289}^{CV}$ | 1,0E+00 | 1,0E+00 | 1,0E+00 | 1,0E+00 | Néant |
| $\delta_{KFC0289}^{CV}$ | 0 | 0 | 0 | 0 | Néant |

Ensuite, des limites HL et LL de symptômes de corrélation sont déterminées lors d'une opération 180 à partir des valeurs des variables archivées, lors de l'étape 120, sur une période sans défaillance.

Lors d'une sous-opération 182, les variables MV, CV et DV sont filtrées, de manière à obtenir les variables filtrées $MV_{filt}(t)$, $CV_{filt}(t)$ et $DV_{filt}(t)$ correspondantes à l'aide des relations suivantes :

$$MV_{filt}(t) = (MV(t) \times \alpha + MV_{filt}(t-1) \times (1-\alpha)) \qquad (8)$$

$$CV_{filt}(t) = (CV(t) \times \alpha + CV_{filt}(t-1) \times (1-\alpha)) \qquad (9)$$

$$DV_{filt}(t) = (CV(t) \times \alpha + DV_{filt}(t-1) \times (1-\alpha)) \qquad (10)$$

Où $\alpha$ est une constante égale, par exemple, à 0,2.

Ensuite, lors d'une sous-opération 184, les variations $d\overline{MV(t)}$, $d\overline{CV(t)}$ et $d\overline{DV(t)}$ respectivement pour les variables $MV_{filt}$ (t), $CV_{filt}(t)$ et $DV_{filt}(t)$ sont calculées à l'aide de la relation suivante :

$$\overline{dF(t)} = \frac{\displaystyle\sum_{j=1}^{n}\sum_{i=0}^{n-j}\frac{\left(F_{filt}(t-i) - F_{filt}(t-i-j)\right)}{j}}{\displaystyle\sum_{j=1}^{n}\left(\sum_{i=0}^{n-j}(j)\right)} \qquad (11)$$

où :

- $\overline{dF(t)}$ est la variation calculée d'une variable F, le symbole F étant ici utilisé à la place de l'un des symboles MV,CV et DV précédemment définis ;
- $F_{filt}(t-i)$ est la valeur filtrée de la variable F à l'instant t-i ;
- i est un indice variant de 0 à n-j ;
- j est un indice variant de 1 à n ; et
- n est une constante définissant le nombre de valeurs prises en compte pour le calcul de la variation de la variable F. n est, ici, fixé égal à 5.

Pour les variables L contenant une mesure de niveau, la double variation $\overline{ddL(t)}$ est utilisée en lieu et place de la variation $\overline{dL(t)}$. La double variation ddL(t) est calculée à l'aide de la relation suivante, lors de l'opération 184 :

$$\overline{ddL(t)} = \overline{dL(t)} - \overline{dL(t-1)} \qquad (12)$$

Cette remarque s'applique à tout ce qui suit.
Puis, lors d'une sous-opération 186, l'écart type sur les variations des valeurs filtrées des variables MV, CV et DV est calculé à l'aide de la relation suivante :

$$\sigma(dF(t)) = \sqrt{\frac{\displaystyle\sum_{j=1}^{n}\sum_{i=0}^{n-j}\left(\frac{\left(F_{filt}(t-i) - F_{filt}(t-i-j)\right)}{j} - \overline{dF(t)}\right)^2}{\displaystyle\sum_{j=1}^{n}\left(\sum_{i=0}^{n-j}(j)\right)}} \qquad (13)$$

Lors d'une sous-opération 188, pour chacune des variables MV, CV et DV un coefficient de confiance $C_{dF}(t)$ est calculé selon la relation suivante :

$$C_{dF(t)} = \frac{\overline{dF(t)}}{\sigma\left(dF(t)\right)} \; si \; \sigma\left(dF(t)\right) \; non \; nul, \; sinon \; C_{dF(t)} = 0 \qquad (14)$$

Ce coefficient de confiance indique la confiance que l'on peut avoir dans le fait que la variation calculée lors de la sous-opération 184 soit représentative de l'évolution réelle de l'installation.

Lors d'une sous-opération 190, le produit $P(\overline{dMV(t)}), (\overline{dCV(t)})$ des variations des variables MV et CV est calculé à l'aide de la relation suivante :

$$P(\overline{dMV(t)}, \overline{dCV(t)}) = \overline{dMV(t - \delta_{MV}^{CV})} \times \overline{dCV(t)} \qquad (15)$$

Lors d'une sous-opération 192, pour chaque couple de variables corrélées, le sens pondéré de variations $S_{pond}$ est calculé à l'aide de la relation suivante :

$$S_{pond}\left(\overline{dMV(t)}, \overline{dCV(t)}\right) = P\left(\overline{dMV(t)}, \overline{dCV(t)}\right) \times Min\left(Abs(C_{dMV(t)}), Abs(C_{dCV(t)})\right) \qquad (16)$$

Où :

- $C_{dMV}(t)$ et $C_{dCV}(t)$ sont les coefficients de confiance pour la variation des variables MV et CV respectivement calculés lors de la sous-opération 188 ;
- Abs(..) est la fonction valeur absolue ;
- Min(..) est la fonction qui retourne la valeur minimale entre plusieurs valeurs possibles.

Lors d'une sous-opération 194, l'influence $I(\overline{dMV(t)}), (\overline{dCV(t)})$ des variations de la variable MV sur les variations de la variable CV est calculée à l'aide de la relation suivante :

$$I\left(\overline{dMV(t)}, \overline{dCV(t)}\right) = Abs\left|G_{MV}^{CV} \times dMV\left(t - \delta_{MV}^{CV}\right)\right| \qquad (17)$$

De même, lors de cette sous-opération 194, l'influence $I(\overline{dDV(t)}, \overline{dCV(t)})$ de chaque variable perturbatrice DV sur les variations de la variable CV est calculée à l'aide de la relation suivante :

$$I\left(\overline{dDV(t)}, \overline{dCV(t)}\right) = Abs\left|G_{DV}^{CV} \times dDV\left(t - \delta_{DV}^{CV}\right)\right| \qquad (18)$$

Les différentes influences calculées lors de la sous-opération 194 sont utilisées, lors d'une sous-opération 196, pour calculer un rapport d'influence permettant de mesurer la part des variations de la variable CV qui peuvent être expliquées par les variations de la variable MV. Ce rapport d'influence $R(\overline{dMV(t)}, \overline{dCV(t)})$ est calculé selon la relation suivante :

$$R\left(\overline{dMV(t)}, \overline{dCV(t)}\right) = \frac{I\left(\overline{dMV(t)}, \overline{dCV(t)}\right)}{I\left(\overline{dMV(t)}, \overline{dCV(t)}\right) + \sum_{i=1}^{n} I\left(\overline{dDV(t)}, \overline{dCV(t)}\right)} \qquad (19)$$

Le rapport d'influence est utilisé lors d'une sous-opération 198, pour calculer un sens de variations atténué

$S_{att}$ selon les relations suivantes :

$$si\ S_{pond}\left(\overline{dMV(t)},\overline{dCV(t)}\right) \times S_{atd}\left(\overline{dMV(t)},\overline{dCV(t)}\right) > 0\ alors\ S_{att}\left(\overline{dMV(t)},\overline{dCV(t)}\right) = 0 \qquad (20)$$

sinon

$$S_{att}\left(\overline{dMV(t)},\overline{dCV(t)}\right) = Abs\left[S_{pond}\left(\overline{dMV(t)},\overline{dCV(t)}\right)\right] \times \left[R\left(\overline{dMV(t)},\overline{dCV(t)}\right)\right]^{1+\alpha} \qquad (21)$$

où :

- $\alpha$ est une constante choisie égale à 10 par défaut,

- Satd $\left(\overline{dMV(t)}\right)$, $\left(\overline{dCV(t)}\right)$ est le sens de variation attendu défini pour ce couple de variables corrélées, lors de l'opération 174.

Lors d'une sous-opération 200, la valeur maximale $S_{att\text{-}max}$ du sens $S_{att}$ calculée sur la période archivée sélectionnée est relevée. La valeur maximale $R_{max}$ du rapport d'influence est également relevée lors de la sous-opération 200.

Ensuite, lors d'une sous-opération 202, les limites HL et LL du symptôme de corrélation sont calculées à l'aide des relations suivantes :

$$HL = 25 \times LL \qquad (22)$$

$$LL = \left[\frac{S_{att-max}\left(\overline{dMV(t)},\overline{dCV(t)}\right)}{\left[(25-1) \times 0,1\right] + \left[R_{max}\left(\overline{dMV(t)},\overline{dCV(t)}\right)\right]^{1+\alpha}}\right] \qquad (23)$$

où :

- $S_{att\text{-}max}(\overline{dMV(t)},\overline{dCV(t)})$ est la valeur maximale du sens $S_{att}$ relevée lors la sous-opération 200 ; et

- $R_{max}(\overline{dMX(t)},\overline{dCV(t)})$ est la valeur maximale du rapport d'influence également relevée lors de la sous-opération 200.

Une fois les limites HL et LL déterminées pour chaque couple de variables corrélées, un seuil de sélection $SL_{MLK}$ est enregistré lors d'une opération 206. Ici, ce seuil $SL_{MLK}$ est choisi égal à 0,8 pour tous les couples de variables corrélées.

La phase d'initialisation s'achève alors et la phase 124 peut alors être exécutée par le calculateur 60 en même temps que l'installation 2 fonctionne.

Lors du fonctionnement de l'installation 2, les grandeurs physiques représentant un état de fonctionnement de cette installation sont mesurées, lors d'une étape 220, par les différents capteurs placés dans cette installation. Les valeurs mesurées sont acquises, lors d'une étape 222, par la carte d'acquisition 62 et mémorisées dans les variables correspondantes. Lors de l'étape 222, si cela est nécessaire, les consignes de commande ainsi que les commandes sont également acquises et enregistrées dans des variables correspondantes.

Les valeurs acquises par la carte 62 sont alors soumises à un processus de validation, lors d'une étape 224. Lors de l'étape 224, différents tests sont réalisés sur les valeurs mesurées, de manière à déterminer celles qui émanent d'un capteur défaillant. Par exemple, les points suivants sont vérifiés par le module 80 :

- la valeur mesurée n'est-elle pas hors de l'échelle du capteur ?
- la valeur mesurée n'est-elle pas en dehors des limites de fonctionnement de l'installation 2 ?
- les valeurs successives mesurées pour un capteur ne correspondent-elles pas à un signal plat ?
- les valeurs mesurées par un capteur ne sont-elles pas représentatives d'une lente dérive de ce capteur ?
- le taux de variation des valeurs mesurées successives ne dépasse-t-il pas une limite prédéterminée ?

Si la réponse à l'un de ces points de vérification est oui, alors la valeur mesurée est invalide, et celle-ci n'est pas utilisée pour la suite du procédé. Dés lors aucun des symptômes utilisant la variable contenant la valeur mesurée invalide n'est calculé.

Ensuite, lors d'une étape 226, les mesures virtuelles, telles que, par exemple, la variable KYFV0203, sont calculées à partir des valeurs mesurées validées.

Puis, la cohérence des valeurs mesurées est vérifiée à l'aide des symptômes de redondance, des symptômes de bilans matière instantané et cumulé et des symptômes de corrélation définis pendant la phase 122. En fait, le module 80 vérifie la cohérence des valeurs mesurées à l'aide de symptômes de redondance, de bilan matière et de corrélation respectivement lors d'étapes 230, 232 et 234.

Lors de l'étape 230, un symptôme de redondance $Sy_R(t)$ est calculé pour chaque couple de variables redondantes, lors d'une opération 240.

Plus précisément, lors d'une sous-opération 242, la redondance Red est calculée à l'aide de la relation (1). Puis, lors d'une sous-opération 244, la valeur du symptôme $Sy_R(t)$ est calculée à l'aide de l'algorithme suivant :

*si Red $\geq$ HL, alors $Sy_R(t) = 1$ ;*
*sinon {si Red $\leq$ LL, alors $Sy_R(t) = 0$ ;*
*sinon $Sy_R(t) = (Red\text{-}LL) / (HL\text{-}LL)$ }.*

où : HL et LL sont les valeurs des limites déterminées lors de la sous-opération 140 pour ce couple de variables redondantes.

La valeur du symptôme $Sy_R(t)$ calculée est comparée, lors d'une opération 246, au seuil de sélection $SL_R$. Si la valeur du symptôme $Sy_R(t)$ est supérieure au seuil $SL_R$, alors les variables de ce couple de variables redondantes sont sélectionnées, lors d'une opération 248, comme étant pertinentes pour déceler une défaillance dans l'installation. En effet, dans ce cas là, un écart significatif existe entre les valeurs de ces variables redondantes, ce qui signifie que l'un des capteurs correspondant est peut-être défaillant et que ces variables et l'information qu'elles représentent présentent un intérêt pour la méthode de diagnostic.

Dans le cas contraire, c'est-à-dire si la valeur du symptôme $Sy_R(t)$ est inférieure au seuil $SL_R$, alors aucune variable n'est sélectionnée comme étant pertinente. Les opérations 240 à 246 sont réitérées pour chaque couple de variables redondantes.

L'étape 232 commence par le calcul de la valeur d'un symptôme $Sy_{BMI}(t)$ d'un bilan matière instantané. Pour cela, le bilan matière instantané MBinst(t) est calculé à l'aide de la relation (4). Ensuite, la valeur du symptôme $Sy_{BMI}$ est calculé à l'aide des relations suivantes :

$$si \qquad \left(MBinst(t) - E_{BM-Ref}\right) \geq HL \; alors \; Sy_{BMI}(t) = 1$$

$$sinon \left\{ \; si \quad \left(MBinst(t) - E_{BM-Ref}\right) \leq LL \; alors \; Sy_{BMI} = 0 \; \right. ;$$

$$sinon \; Sy_{BMI}(t) = \left(MBinst(t) - E_{BM-Ref} - LL\right)/\left(HL - LL\right) \; \}$$

où :

- HL et LL sont les limites déterminées pour ce bilan matière instantané lors de l'opération 158 ;
- $E_{BM-Ref}$ est l'écart de référence calculé lors de l'opération 156 pour ce bilan matière instantané.

Ensuite, lors d'une opération 252, la valeur calculée du symptôme $Sy_{BMI}(t)$ est comparée au seuil de sélection $SL_{BMI}$ fixé, lors de l'opération 164. Si la valeur calculée du symptôme $Sy_{BMI}(t)$ est supérieure au seuil $SL_{BMI}$, alors les variables impliquées dans le calcul de ce bilan matière instantané sont sélectionnées, lors d'une opération 254, comme étant pertinentes pour déceler une défaillance. En effet, le bilan matière réalisé autour d'un ballon n'est pas respecté, ce qui signifie que probablement l'un des capteurs mesurant une quantité de matière est défaillant.

Dans le cas contraire, c'est-à-dire si lors de l'opération 252, la valeur calculée du symptôme $Sy_{BMI}$ est inférieure au seuil $SL_{BMI}$, alors aucune variable n'est sélectionnée.

Ensuite, un symptôme $Sy_{BMC}(t)$ de bilan matière cumulé est calculé, lors d'une opération 260. Pour cela, le bilan matière accumulé BMaccum(t) est d'abord calculé en accumulant les bilans matière instantanés BMinst(t) durant un nombre de cycles fixés lors de la sous-opération 160 pour ce bilan matière instantané. Le bilan matière cumulé est, par exemple, calculé à l'aide de la relation suivante :

$$\mathrm{BMaccum(t)} = \sum_{t-n}^{t} \left( \mathrm{BMinst(t)} - \mathrm{E_{BM-Ref}} \right) \qquad (26)$$

où :

- n est le nombre cycles.

Ensuite, lors de l'opération 260, la valeur du symptôme $Sy_{BMC}(t)$ est calculée à l'aide de la relation suivante :

$$Si \qquad \mathrm{BMaccum(t)} \geq \mathrm{HL} \; alors \; \mathrm{Sy_{BMC}(t)} = 1$$

$$Sinon \left\{ si \qquad \mathrm{BMaccum(t)} \leq \mathrm{LL} \; alors \; \mathrm{Sy_{BMC}(t)} = 0 \;\; ; \right.$$

$$\left. Sinon \quad \mathrm{Sy_{BMC}(t)} = \left( \mathrm{BMaccum(t)} - \mathrm{LL} \right) / \left( \mathrm{HL} - \mathrm{LL} \right) \right\} \qquad (27)$$

où :

- HL et LL sont les limites déterminées, lors de l'opération 162 pour ce bilan matière cumulé.

Une fois la valeur du symptôme $Sy_{BMC}(t)$ calculée, celle-ci est comparée, lors d'une opération 262 à la valeur du seuil $SL_{BMC}$ fixée lors de l'opération 164. Si la valeur du symptôme $Sy_{BMC}(t)$ est supérieure au seuil $SL_{BMC}$, alors les variables impliquées dans le calcul de ce bilan matière cumulé sont sélectionnées lors d'une étape 264 en tant que variables pertinentes pour déceler une défaillance. Dans le cas contraire, aucune variable n'est sélectionnée.

Si la valeur du symptôme $Sy_{BMC}(t)$ est supérieure à $SL_{BMC}$, cela signifie qu'au moins l'un des capteurs utilisé pour mesurer les quantités de matière est probablement défaillant.

Les opérations 250 à 262, sont réitérées pour chaque bilan matière définie, lors de l'étape 150.

Lors de l'étape 234, un symptôme de corrélation $Sy_{MLK}(t)$ est calculé pour chaque couple de variables corrélées définies lors de l'étape 170. Ce calcul est réalisé, lors d'une opération 270.

Plus précisément, lors de l'opération 270, les valeurs des variables MV, CV et DV sont filtrées à l'aide des relations (8), (9) et (10), lors d'une sous-opération 272. A partir de ces valeurs filtrées, les variations $\overline{dMV(t)}$, $\overline{dCV(t)}$ et $\overline{dDV(t)}$ sont calculées lors d'une sous-opération 274, à l'aide de la relation (11). Pour les variables contenant une mesure de niveau, la double variation $\overline{ddL(t)}$ est calculée à l'aide de la relation (12). Cette double variation est ensuite utilisée en lieu et place de la variation $\overline{dL(t)}$.

Ensuite, l'écart type sur les variations des variables MV, CV et DV est également calculé, lors d'une sous-opération 276, à l'aide de la relation (13).

Les coefficients de confiance $C_{dMV(t)}$, $C_{dcv(t)}$ et $C_{dDV(t)}$ sur les variations des variables MV, CV et DV sont calculés, lors d'une sous-opération 278, à l'aide de la relation (14).

Puis, les produits des variations $\overline{dMV(t)}$ et $\overline{dCV(t)}$ sont calculés, lors d'une sous-opération 280, à l'aide de la relation (15).

Après, lors d'une sous-opération 282, le sens de variation pondéré $S_{pond}(\overline{dMV(t)}, \overline{dCV(t)})$ est calculé à l'aide de la relation (16).

Puis, l'influence I ( $\overline{dMV(t)}$ , $\overline{dCV(t)}$ ) et, s'il existe des variables perturbatrices DV, les influences I ( $\overline{dDV(t)}$ , $\overline{dCV(t)}$ ) sont calculées à l'aide des relations (17) et (18), lors d'une sous-opération 284. Les influences calculées sont ensuite utilisées, lors d'une sous-opération 286 pour calculer le rapport d'influence R( $\overline{dMV(t)}$ , $\overline{dCV(t)}$ ), à l'aide de la relation (19).

Le sens de variation atténué $S_{att}$ est alors calculé pour chaque couple de variables corrélées, à l'aide des relations (20) et (21), lors d'une sous-opération 288.

Enfin, la valeur du symptôme $Sy_{MLK}(t)$ est calculée à l'aide de la relation suivante, lors d'une sous-opération 290 : *si*

$$S_{pond}\left(\overline{dMV(t)},\overline{dCV(t)}\right) \times S_{atd}\left(\overline{dMV(t)},\overline{dCV(t)}\right) > 0 \quad \textit{alors} \ Sy_{MLK}\left(t\right) = 0 \tag{28}$$

*sinon*

$$Sy_{MLK}\left(t\right) = \frac{\left(Abs\left[S_{att}\left(\overline{dMV(t)},\overline{dCV(t)}\right)\right] - LL\right)}{\left(HL - LL\right)} \tag{29}$$

où :

- HL et LL sont les limites déterminées lors de la sous-opération 202 pour ce couple de variables corrélées ;

- $S_{atd}$ ( $\overline{dMV(t)},\overline{dCV(t)}$ $\overline{dCV(t)}$ ) est le sens attendu de variation défini lors de l'opération 174 pour ce couple de variables corrélées.

Ensuite, lors d'une opération 292, la valeur calculée du symptôme $Sy_{MLK}(t)$ est comparée au seuil $SL_{MLK}$. Si la valeur du symptôme $Sy_{MLK}(t)$ est supérieure au seuil $SL_{MLK}$, alors les variables corrélées du couple sont sélectionnées en tant que variables pertinentes pour déceler une défaillance de l'installation, lors d'une opération 294. Dans le cas contraire, aucune des variables du couple n'est sélectionnée en tant que variable pertinente.

Si le symptôme $Sy_{MLK}(t)$ est supérieur au seuil $SL_{MLK}$ cela signifie que les variations des variables MV et CV ne respectent pas la relation causale qui les unit, c'est-à-dire, en d'autres termes que les variations mesurées pour la variable MV ne permettent pas d'expliquer les variations mesurées pour la variable CV. Ceci traduit donc la présence d'une défaillance dans l'installation 2.

Les opérations 270 à 292 sont réitérées pour chaque couple de variables corrélées.

La phase 124 est réitérée à chaque instant courant pour pouvoir sélectionner en temps réel les variables pertinentes.

A l'issue de la phase de sélection 124, les variables pertinentes sélectionnées sont transmises à l'interface homme/machine 100 pour afficher le nom et le contenu de ces variables, lors d'une étape 300. Si le nombre de variables sélectionnées est petit, un opérateur en examinant ces variables peut déterminer lui-même quelle est la cause de la défaillance et il n'est pas nécessaire d'exécuter une méthode automatique de diagnostic.

Les variables sélectionnées sont également transmises au module 102 de diagnostic de panne. Ce module détermine automatiquement uniquement à partir des variables pertinentes sélectionnées, quelle est la panne ou la défaillance, lors d'une étape 302.

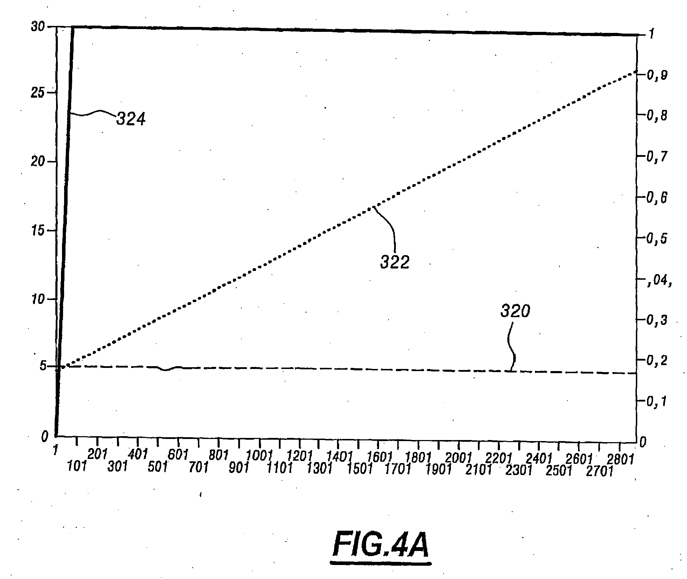

Les figures 4A à 4C illustrent le fonctionnement du procédé des figures 3A et 3B, dans le cas d'une défaillance du capteur de niveau 8 se traduisant par une dérive constante de la valeur mesurée, alors que le niveau ne bouge pas.

Sur le graphe de la figure 4A, une courbe 320 représente la valeur du niveau mesuré par le capteur 10 qui fonctionne normalement. Ce niveau est stable et ne bouge pas.

Une courbe 322 représente la valeur du niveau mesurée par le capteur 8. Cette valeur augmente régulièrement au cours du temps, de sorte qu'au bout de deux heures un écart de 12% existe entre la valeur réelle du niveau et la valeur mesurée par le capteur 8.

Enfin, sur la figure 4A, une courbe 324 représente la valeur du symptôme de redondance calculé pour le couple de variables KLCA0283 et KLCA0203. Comme représenté, la valeur de ce symptôme $Sy_R(t)$ atteint très rapidement la valeur 1 provoquant ainsi la sélection des variables KLCA0203 et KLCA0283, comme étant pertinentes pour déceler cette défaillance. L'axe des ordonnées à gauche du graphe représente la valeur du symptôme $Sy_R(t)$.

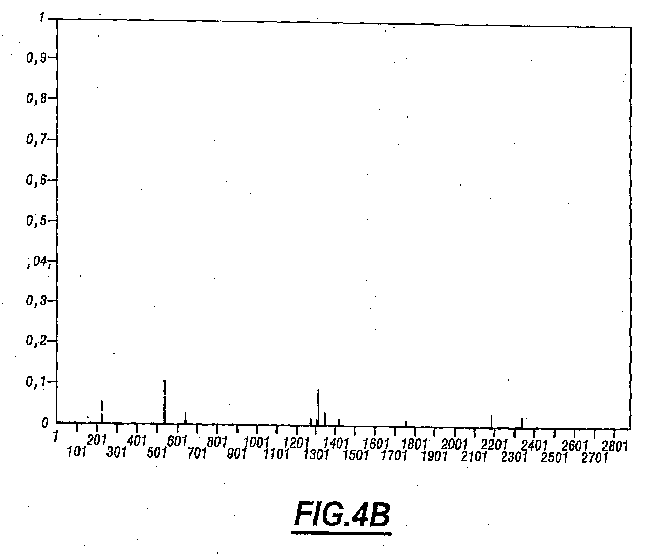

La figure 4B représente à titre d'exemple l'évolution de la valeur d'un des symptômes de corrélation au cours de la même période de temps. Comme illustré, ce symptôme, comme les autres symptômes de corrélation définis ici, n'est d'aucune utilité pour sélectionner les variables pertinentes, dans le cas particulier de ce type de panne. En effet, une dérive continue et constante d'un capteur ne se traduit pas par un changement de la valeur de la double variation

$\overline{ddL(t)}$ (accélération du niveau), de sorte que cette défaillance reste indétectable à l'aide de symptômes de corrélation.

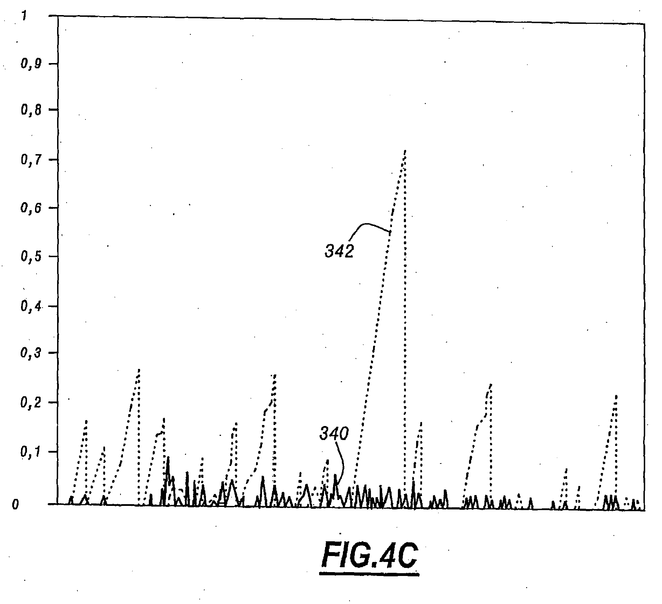

Sur le graphe de la figure 4C, les courbes 340 et 342 représentent l'évolution au cours du temps, respectivement des symptômes $Sy_{BMI}(t)$ et $Sy_{BMC}(t)$ pour les bilans matière impliquant la variable KLCA0203. Comme illustré sur ce graphe, la défaillance reste indécelable à l'aide du symptôme $SY_{BMI}(t)$. Par contre, la valeur du symptôme $Sy_{BMC}(t)$ dépasse, après un certain temps le seuil $SL_{BMC}$, ce qui provoque la sélection des variables impliquées dans le calcul de ce bilan matière cumulé en tant que variables pertinentes.

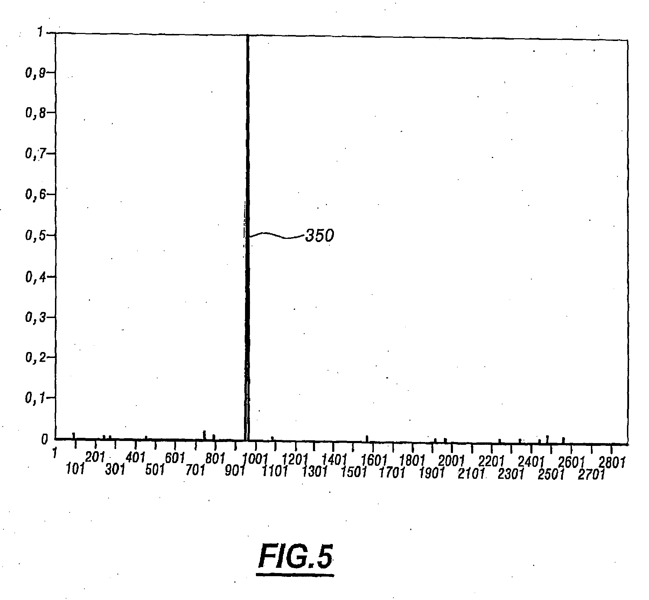

Le graphe de la figure 5 comporte une courbe 350 représentant l'évolution au cours du temps du symptôme de corrélation entre les variables KYFV0203 et KLV0203, dans le cas particulier où la valeur mesurée de la position de la vanne 46 augmente régulièrement au cours du temps sans que cela corresponde à un déplacement réel de la vanne. Comme illustré sur le graphe de la figure 5, la valeur du symptôme $SY_{MLK}(t)$ pour le couple de variables corrélées KYFV0203 et KLV0203 dépasse à un moment donné le seuil $SL_{MLK}$, ce qui se traduit par la sélection de ces variables en tant que variables pertinentes pour déceler une défaillance. En effet, dans le cas d'une telle défaillance, les variations mesurées de la position de la vanne ne sont plus corrélées au débit mesuré dans la canalisation 42. On notera également qu'aucun des autres symptômes de corrélation défini ici, ne réagit à cette défaillance du capteur 48.

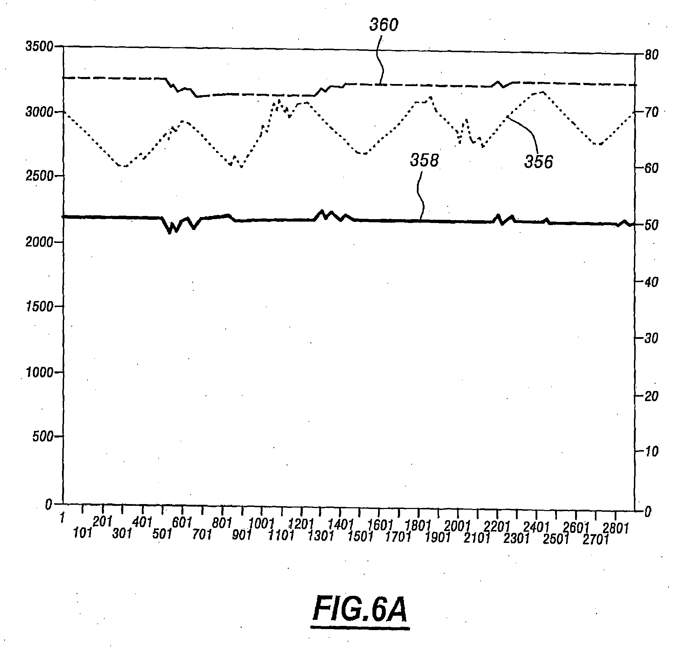

Le graphe de la figure 6A représente un cas particulier de défaillance de l'installation 2 qui se traduit par une évolution en dents de scie de la variable calculée KYFV0203 comme illustré par la courbe 356.

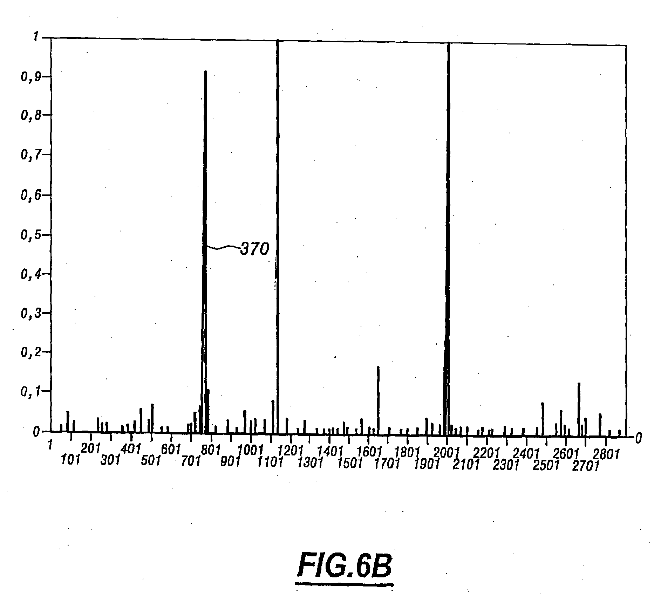

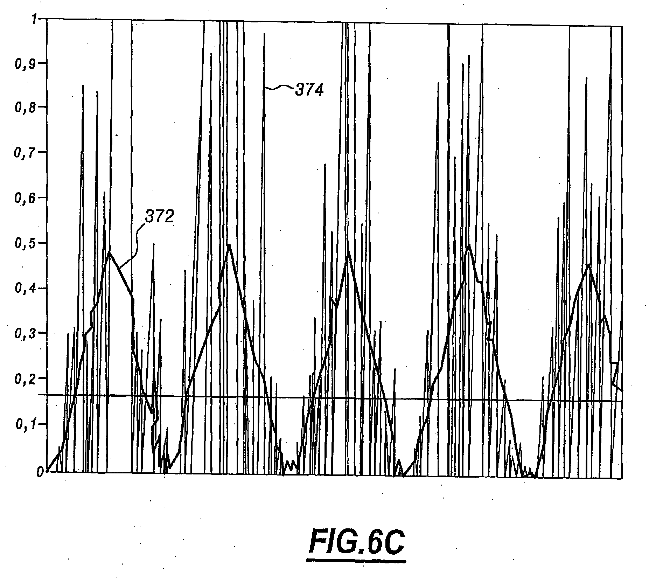

Le graphe de la figure 6 comporte également des courbes 358 et 360 représentant respectivement l'évolution au cours du temps de la valeur des variables KLCA0203 et KLV0203.

Une telle défaillance de l'installation n'a aucun impact sur les symptômes de redondance. Par contre, comme illustré par une courbe 370, sur le graphe de la figure 6B, la valeur du symptôme de corrélation entre les variables KYFV0203 et KLV0203 dépasse plusieurs fois la valeur du seuil $SL_{MLK}$, ce qui conduit à sélectionner ces deux variables comme étant pertinentes pour déceler une défaillance. En effet, les variations en dent de scie du débit dans la canalisation 42 ne correspondent pas, ici, à une variation correspondante de la position de la vanne 46. Il est donc probable que ces variations en dent de scie résultent d'une défaillance de l'installation 2.

La valeur des autres symptômes n'est que peu affectée par cette défaillance de l'installation 2.

Cette défaillance a également des répercutions sur les bilans matière et en particulier sur les bilans matière instantané et cumulé impliquant la variable KLCA0203. Le graphe de la figure 6C comporte des courbes 372 et 374 représentant l'évolution au cours du temps respectivement des symptômes $Sy_{BMI}(t)$ et $Sy_{BMC}(t)$ calculés pour les bilans matière impliquant la variable KLCA0203. Comme illustré sur le graphe de la figure 6, ces deux symptômes dépassent à plusieurs reprises les seuils de sélection $SL_{BMI}$ et $SL_{BMC}$, de sorte que les variables impliquées dans le calcul de ces symptômes sont sélectionnées en tant que variables pertinentes.

De nombreux autres modes de réalisation du système de la figure 2 et du procédé des figures 3A et 3B sont possibles. Par exemple, en variante, lorsque le rapport d'influence calculé indique que la variable influente principale MV n'est pas la seule à influer sur les variations de la variable commandée CV, le symptôme de corrélation n'est pas utilisé. Ceci permet de simplifier les calculs et accélère donc l'exécution du procédé. Ainsi dans cette variante, seuls les symptômes de corrélation n'impliquant aucune variable perturbatrice sont pris en compte.

Des bilans matière instantanés et cumulés ont été décrits, ici, dans le cas particulier d'une partie d'installation comportant un seul ballon. Toutefois, le principe décrit pour calculer un bilan matière instantané et un bilan matière cumulé peut également être appliqué à un groupe de plusieurs ballons ou récipients. De même, un bilan matière peut non seulement être calculé pour un ballon mais pour toutes sortes de cuves ou de réacteurs, c'est-à-dire pour tout équipement formant un récipient de stockage de matière.

Ici, seules les variables mesurées par des capteurs ont été utilisées pour définir des symptômes de redondance, de bilan matière et de corrélation. En variante, les variables contenant des consignes de commande ou contenant des commandes peuvent également être utilisées pour définir de tels symptômes.

**Revendications**

1. Procédé de sélection automatique de variables pertinentes pour déceler une défaillance dans une installation automatisée de production d'un produit, chacune des variable contenant la valeur d'une grandeur physique représentative de l'état de fonctionnement de l'installation, **caractérisé en ce que** ce procédé comporte :

   - pour chaque couple de variables corrélées formé d'une variable influente principale et d'une variable commandée, une étape (220) de mesure des variations de la variable influente principale et de la variable commandée à l'aide de capteurs, les variations de la variable influente principale et de la variable commandée étant corrélées par l'intermédiaire d'une relation causale,
   - une étape (234) de vérification que la variable commandée varie dans une proportion explicable par la variation de la variable influente principale en calculant un symptôme (en 270) de corrélation dont la valeur est fonction, à la fois des variations mesurées de la variable influente principale et de la variable commandée, puis en comparant (en 292) la valeur calculée de ce symptôme à un seuil prédéterminé, et
   - une étape (294) de sélection de la variable influente principale et de la variable commandée en tant que variables pertinentes, si le seuil prédéterminé est franchi.

2. Procédé selon la revendication 1, **caractérisé en ce qu'**il comporte :

   - lors de l'initialisation du procédé, une étape (174) de définition pour chaque couple de variables corrélées d'un sens de variation attendu de la variable commandée par rapport au sens de variation de la variable influente principale, et
   - une étape (292) de réduction du nombre de variables potentiellement pertinentes pour déceler une défaillance en éliminant systématiquement tous les couples de variables corrélées dans lesquels le sens de variation de la variable commandée par rapport au sens de variation de la variable influente principale correspond au sens de variation attendu défini lors de l'initialisation du procédé.

3. Procédé selon l'une quelconque des revendications précédentes, **caractérisé en ce que** le symptôme de corrélation calculé est proportionnel au produit des variations mesurées de la variable influente principale et de la variable commandée.

4. Procédé selon l'une quelconque des revendications précédentes, **caractérisé en ce qu'**il comporte :

   - lors de l'initialisation du procédé, une étape (176) de définition pour chaque couple de variables corrélées d'un retard prédéterminé représentant le temps écoulé entre l'instant où la variable influente principale varie et l'instant où la variable commandée varie en réponse à cette variation de la variable influente principale, et
   - **en ce que** le symptôme de corrélation calculé est proportionnel au produit de la variation mesurée de la variable commandée à l'instant courant et de la variation mesurée de la variable influente principale à l'instant courant moins le retard prédéterminé défini pour ce couple lors de l'initialisation du procédé.

5. Procédé selon la revendication 3 ou 4, **caractérisé en ce qu'**il comporte une étape (278) de calcul d'un coefficient de confiance proportionnel à la moyenne des variations mesurées pour l'une des variables du couple divisé par l'écart type des variations mesurées pour cette même variable, et **en ce que** le symptôme de corrélation calculé est également fonction de ce coefficient de confiance calculé.

6. Procédé selon l'une quelconque des revendications précédentes, **caractérisé en ce qu'**il comporte une étape (286) de calcul d'un rapport d'influence des variations de la variable influente principale sur les variations de la variable commandée en fonction des variations mesurées de la variable influente principale et de variations mesurées pour une ou plusieurs variables perturbatrices, chaque variable perturbatrice étant propre à influer sur les variations de la variable commandée, et **en ce que** le symptôme de corrélation calculé est fonction du rapport d'influence calculé.

7. Procédé selon la revendication 6, **caractérisé en ce qu'**il comporte :

   - lors de l'initialisation du procédé, une étape (178) de définition d'un gain prédéterminé entre les variations de la variable influente principale et les variations de la variable commandée et d'un gain entre les variations de chaque variable perturbatrice et les variations de la variable commandée, et
   - **en ce que** le rapport d'influence calculé est également fonction de ces gains prédéterminés.

8.  Procédé selon l'une quelconque des revendications précédentes, **caractérisé en ce qu'**il comporte :

    - une étape (220) de mesure d'une même grandeur physique de l'installation à l'aide d'un couple de deux capteurs différents, les valeurs mesurées par chaque capteur étant contenues dans des variables respectives d'un couple de variables redondantes,
    - une étape (230) de vérification si un écart entre les valeurs mesurées par chaque capteur reste à l'intérieur de limites prédéterminées en calculant (en 240) un symptôme de redondance dont la valeur est fonction de l'écart entre les valeurs mesurées par chacun des capteurs du couple, puis en comparant (en 246) la valeur calculée pour ce symptôme à un seuil prédéterminé, et
    - une étape (248) de sélection du couple de variables redondantes en tant que variables pertinentes si le seuil prédéterminé est franchi.

9.  Procédé selon l'une quelconque des revendications précédentes, **caractérisé en ce qu'**il comporte :

    - pour au moins un récipient de stockage de matière, une étape (220) de mesure des quantités de matière entrante et sortante du récipient et une étape (220) de mesure de la quantité de matière stockée à l'intérieur du récipient à l'aide de capteurs, chaque quantité mesurée étant contenue dans une variable correspondante,
    - une étape (232) de vérification d'un bilan matière instantané en calculant (en 250) un symptôme de bilan matière instantané dont la valeur est fonction de la différence entre d'une part les quantités mesurées de matière entrante et sortante entre un instant courant et un instant précédent, et, d'autre part, la différence entre les quantités mesurées de matière stockée à l'instant courant et à l'instant précédent, puis en comparant (en 252) la valeur calculée de ce symptôme de bilan matière instantané à un seuil prédéterminé,
    - une étape (254) de sélection des variables contenant les quantités mesurées de matière en tant que variables pertinentes si le seuil prédéterminé est franchi.

10. Procédé selon la revendication 9, **caractérisé en ce qu'**il comporte une étape de vérification d'un bilan matière cumulé pour ce récipient en calculant (en 260) un symptôme de bilan matière cumulé dont la valeur est fonction de l'accumulation des valeurs calculées du symptôme de bilan matière instantané, pendant une période de temps sur laquelle le sens de variation de la quantité de matière stockée ne change pas, puis en comparant (en 262) la valeur calculée du symptôme de bilan matière cumulé à un seuil prédéterminé, et **en ce qu'**il comporte une étape (264) de sélection des variables contenant des quantités mesurées de matière en tant que variables pertinentes si le seuil prédéterminé est franchi.

11. Support d'enregistrement d'informations, **caractérisé en ce qu'**il comporte des instructions pour l'exécution d'un procédé de sélection conforme à l'une quelconque des revendications précédentes, lorsque ces instructions sont exécutées par un calculateur électronique.

12. Programme d'ordinateur, **caractérisé en ce qu'**il comporte des instructions pour l'exécution d'un procédé de sélection conforme à l'une quelconque des revendications précédentes, lorsque ces instructions sont exécutées par un calculateur électronique.

13. Système de sélection automatique de variables pertinentes pour déceler une défaillance dans une installation automatisée de production d'un produit, chacune des variables contenant la valeur d'une grandeur physique représentative de l'état de fonctionnement de l'installation, **caractérisé en ce qu'**il comporte :

    - pour chaque couple de variables corrélées formé d'une variable influente principale et d'une variable commandée, des capteurs (8, 10, 30, 32, 34, 44, 48) propres à mesurer les variations de la variable influente principale et de la variable commandée, les variations de la variable influente principale et de la variable commandée étant corrélées par l'intermédiaire d'une relation causale,
    - un module (94) de vérification propre à vérifier si la variable commandée varie dans une proportion explicable par la variation de la variable influente principale en calculant un symptôme dont la valeur est fonction à la fois des variations mesurées de la variable influente principale et de la variable commandée, puis en comparant la valeur calculée de ce symptôme à un seuil prédéterminé, et
    - un module (96) de sélection de la variable influente principale et de la variable commandée en tant que variable pertinente si le seuil prédéterminé est franchi.

FIG.1

EP 1 708 064 A1

## FIG.2

122

-120-

170

132

-130-

-134-
-136-
-138-
-140-
-142-

-172-
-174-
-176-
-178-

180

150

-152-
-154-
-156-
-158-
-160-
-162-
-164-

-182-
-184-
-186-
-188-
-190-
-192-
-194-
-196-
-198-
-200-
-202-

-206-

Ⓐ

**_FIG.3A_**

_FIG.3B_

## FIG.4A

_FIG.4B_

EP 1 708 064 A1

**FIG.4C**

*FIG.5*

EP 1 708 064 A1

_FIG.6A_

EP 1 708 064 A1

*FIG.6B*

*FIG.6C*

Office européen
des brevets

**RAPPORT PARTIEL
DE RECHERCHE EUROPEENNE**
qui selon la règle 45 de la Convention sur le brevet
européen est consideré, aux fins de la procédure ultérieure,
comme le rapport de la recherche européenne

Numéro de la demande

EP 05 35 8004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 085 635 A (GENERAL ELECTRIC COMPANY) 21 mars 2001 (2001-03-21) * alinéa [0075] - alinéa [0082] * ----- | 1,13 | G05B23/02 |
| A | US 2003/204370 A1 (YEMINI YECHIAM ET AL) 30 octobre 2003 (2003-10-30) * alinéa [0070] - alinéa [0071] * ----- | | |

**DOMAINES TECHNIQUES
RECHERCHES (IPC)**

G05B

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| La Haye | 30 novembre 2005 | Kelperis, K |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C08)

**Office européen**

**des brevets**

**RECHERCHE INCOMPLETE**
**FEUILLE SUPPLEMENTAIRE C**

Numéro de la demande

EP 05 35 8004

Revendications ayant fait l'objet de recherches incomplètes:
1-13

Raison pour la limitation de la recherche:

Les  revendications 1 et 13 ont trait à un nombre très important de
dispositifs et de méthodes. Un fondement et exposé au sens de l'article
84 et 83 CBE ne peut cependant être trouvé que pour un nombre très
restreint de ces
dispositifs et méthodes revendiquées, voir page 10,lignes 5- 31.La
non-conformité
avec les exigences quant au fond est telle qu'une recherche significative
portant sur
l'ensemble de l'objet revendiqué n'a pas pu être effectuée (règle 45 CBE
et Directives
B-VIII, 3.). L'étendue de la recherche a par conséquent été limitée.


La recherche portant sur les revendications 1 et 13 a été limitée aux
dispositifs et méthodes revendiquées qui apparaissent avoir
un fondement dans la demande et à une généralisation de leur formule
structurelle.La recherche s'est limitée au domaine des raffineries.

**ANNEXE AU RAPPORT DE RECHERCHE EUROPEENNE**
**RELATIF A LA DEMANDE DE BREVET EUROPEEN NO.**

EP 05 35 8004

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2005

| Document brevet cité au rapport de recherche | | Date de publication | Membre(s) de la famille de brevet(s) | | Date de publication |
|---|---|---|---|---|---|
| EP 1085635 | A | 21-03-2001 | BR | 0004251 A | 02-05-2001 |
| | | | CN | 1292491 A | 25-04-2001 |
| | | | JP | 2001235498 A | 31-08-2001 |
| US 2003204370 | A1 | 30-10-2003 | AUCUN | | |

EPO FORM P0460

Pour tout renseignement concernant cette annexe : voir Journal Officiel de l'Office européen des brevets, No.12/82